# EUROPEAN PATENT APPLICATION

(11) **EP 2 672 558 A1**
(43) Date of publication of application: **11.12.2013**
(21) Application number: 13170358.9
(22) Date of filing: 04.06.2013
(51) Int. Cl.: H01M 8/04, G01L 27/00, H01M 8/06, H01M 8/12

(54) **Fuel cell system**

(30) Priority: 05.06.2012 JP 2012127674
(71) Applicant: AISIN SEIKI KABUSHIKI KAISHA, Kariya-shi, Aichi 448-8650 (JP)
(72) Inventor: Yabutani, Motohiko, Kariya-shi, Aichi 448-8650 (JP)
(74) Representative: TBK

(57) **Abstract**

A fuel cell system capable of easily determining the presence or absence of abnormality of a pressure sensing element (61) provided in a fuel gas passage (6) is to be provided. A control unit 100 (i) drives a gas pump 60 in a state in which a cutout valve 69 is closed or opens the cutout valve 69 from the closed state, and (ii) determines whether or not at least one of a pressure switch 61 and a gas source 63 is abnormal on the basis of variations in pressure sensed by the pressure switch 61.

## Description

### TECHNICAL FIELD

This disclosure relates to a fuel cell system provided with a pressure gauge configured to sense the pressure in a fuel gas passage.

### BACKGROUND DISCUSSION

In Fig. 1 of JP 2009-181699A (Reference 1), there is disclosed that a fuel cell apparatus includes an original fuel gas supply tube (12) configured to supply fuel gas toward a fuel cell and the original fuel gas supply tube (12) includes a electromagnetic valve (7), a desulfurizer (6), a gas flowmeter (8), a buffer (9), a gas pump (4), and a flow rate regulating valve (5) disposed in sequence from the side of a gas source of the fuel gas toward the fuel buttery side. When the fuel cell is in an operation waiting state, the electromagnetic valve (7) and the flow rate regulating valve (5) are closed, and a sealed state is formed between the electromagnetic valve (7) and the flow rate regulating valve (5). Therefore, when the fuel cell apparatus terminates a trial run before starting the operation and stops running or when the fuel cell apparatus stops the operation, the fuel gas between the electromagnetic valve (7) and the flow rate regulating valve (5) in the original fuel gas supply tube (12) is cooled to have a negative pressure. Specifically, since the desulfurizer (6) having a large capacity is provided between the electromagnetic valve (7) and the flow rate regulating valve (5), a negative pressure is created easily in this part. In this case, there is a case where the electromagnetic valve (7) and the flow rate regulating valve (5) do not open due to adhesion or pressure difference between valve portions thereof.

Accordingly, in Fig. 1 of JP 2009-181699A (Reference 1), avoidance of an inoperable state of the electromagnetic valve (7) and the flow rate regulating valve (5) by providing a power source (13) in the desulfurizer (6) and increasing the temperature of the desulfurizer (6), thereby resolving the negative pressure between the desulfurizer (6) and the flow rate regulating valve (5) of the original fuel gas supply tube (12) is proposed. In Fig. 1 of JP 2009-181700A (Reference 2), a blower (13) configured to supply oxygen-containing gas is provided between the desulfurizer (6) and the flow rate regulating valve (5) of the original fuel gas supply tube (12) to resolve the negative pressure between the desulfurizer (6) and the flow rate regulating valve (5). Also, since oxygen-containing gas is supplied also to a reformer arranged on the downstream side of the original fuel gas supply tube (12), partial oxidation reforming or auto thermal reforming may be achieved, so that a fuel cell apparatus is activated effectively.

Incidentally, both in JP 2009-181699A and JP 2009-181700A (References 1 and 2), a pressure gauge is provided between the flow rate regulating valve (5) and the desulfurizer (6) in order to sense the fact that the pressure between the flow rate regulating valve (5) and the desulfurizer (6) of the original fuel gas supply tube (12) becomes a negative pressure. However, when the pressure gauge is broken, a negative pressure in the original fuel gas supply tube (12) cannot be sensed, so that the heat source or the blower for resolving the negative pressure cannot be activated. In addition, when a pressure sensed by the pressure gauge does not indicate a planned pressure value, the pressure gauge might be broken down or, alternatively, abnormality of the gas source is also possible.

As the pressure gauge for sensing the pressure in the original fuel gas supply tube (12), using a relatively inexpensive pressure switch is under review. When the pressure switch is used as the pressure gauge, the switch is set to be electrical conduction (ON) in a case where the pressure is a normal pressure not lower than a predetermined pressure P (for example, 0.3 kPa), which is a negative pressure, and to be electrical conduction cutoff (OFF) in a case where the pressure is a negative pressure lower than the predetermined pressure P. When city gas is used as the fuel gas, an original pressure of the fuel gas, for example, is relatively high such as 1.0 to 2.5 kPa, and the original fuel gas supply tube (12) does not become a negative pressure in a normal state. Therefore, whether or not the pressure switch is normally functioning cannot be confirmed. The breakdown of the pressure switch is, specifically in many cases, a switch binding mode in which the switch cannot be changed between ON and OFF. When the switch is bound, the negative pressure cannot be sensed. Therefore, it is necessary to confirm whether or not the pressure switch is normally functioning. When a general pressure sensor is mounted on the fuel cell apparatus as well, it is necessary to confirm whether or not the pressure sensor is normal in order to enhance reliability of the pressure sensor.

### SUMMARY

In view of such circumstances, it is an object of this disclosure to provide a fuel cell system capable of determining the presence or absence of a breakdown of a pressure sensing element provided in a fuel gas passage or/and abnormality of a gas source easily.

(1) A fuel cell system according to a first aspect of this disclosure is a fuel cell system including: a fuel cell including an anode and a cathode; a cathode gas passage configured to supply cathode gas to the cathode of the fuel cell; a fuel gas passage provided between a gas source of fuel gas and the anode of the fuel cell and configured to supply the fuel gas from the gas source toward the anode of the fuel cell; a gas carrier source provided in the fuel gas passage and configured to carry the fuel gas to the fuel cell side; a cutout valve provided on the gas source side with respect to the gas carrier source in the fuel gas passage and configured to open and close the fuel gas passage; a pressure sensing element configured to sense a physical quantity relating to a gas pressure in a sensing passage portion between the cutout valve and the gas carrier source in the fuel gas passage; and a control unit configured to receive a sensing signal from the pressure sensing element and control the gas carrier source and the cutout valve, wherein the control unit performs a determination process including: (i) driving the gas carrier source in a state in which the cutout valve is closed or opening the cutout valve from the closed state, and (ii) determining whether or not at least one of the pressure sensing element and the gas source is abnormal on the basis of variations in pressure sensed by the pressure sensing element.

In this aspect, the gas carrier source is driven in the state in which the cutout valve in the fuel gas passage is closed or opens the cutout valve from the closed state. Accordingly, the gas pressure in the sensing passage portion is changed, and the variations of the gas pressure are sensed by the pressure sensing element. Therefore, the action of the pressure sensing element may be sensed easily on the fuel cell system.

When the gas carrier source is driven in the state in which the cutout valve is closed or the cutout valve is opened from the closed state, the gas pressure in the sensing passage portion changes when the gas source is normal. In other words, if the gas carrier source is driven in the state in which the cutout valve is closed, the fuel gas in the sensing passage portion is carried to a downstream passage portion on the fuel cell side with respect to the gas carrier source, whereby the gas pressure in the sensing passage portion is reduced. Alternatively, if the cutout valve is opened from the closed state, the fuel gas is flowed from the gas source into the sensing passage portion, and the gas pressure in the sensing passage portion is increased. In this manner, the gas pressure in the sensing passage portion changes.

The pressure sensing element senses the gas pressure in the sensing passage portion of the fuel gas passage, and the sensed pressure enters the control unit as a sensing signal. The control unit determines whether or not the pressure sensing element is broken down on the basis of the variations in pressure sensed by the pressure sensing element.

The control unit may determine whether or not at least one of the pressure sensing element and the gas source is abnormal on the basis of an elapsed time elapsed from a reference clock time relating to the driving of the gas carrier source and variations in pressure sensed by the pressure sensing element.

As a trend of the pressure sensed by the pressure sensing element, there are cases where the pressure sensed according to the elapsed time is reduced, the pressure does not change, and the pressure is increased. When the pressure sensing element is normal, since the actual pressure in the sensing passage portion is changed in the process of (i), the pressure sensed according to the elapsed time also changes. However, when the pressure sensing element is broken down, even if the pressure in the sensing passage portion is changed, the sensed pressure is not changed, or even changed, the change in pressure according to an actual amount of lowering of the pressure in the sensing passage portion do not appear.

Also, when the gas source is abnormal as in a case where the fuel gas is empty in the gas source, the fuel gas does not flow into the sensing passage portion when the cutout valve is opened from the closed state, so that the gas pressure in the sensing passage portion does not change. In such circumstances, when the gas pressure sensed by the pressure sensing element does not vary when the cutout valve is opened from the closed state, there are fears of abnormality of the gas source in addition to the breakdown of the pressure sensing element. Therefore, when the gas pressure sensed by the pressure sensing element does not change when the cutout valve is opened from the closed state, or is remained at a lower gas pressure, it is determined that at least one of the pressure sensing element and the gas source is abnormal.

Accordingly, the control unit may determine the presence or absence of abnormality of at least one of the pressure sensing element and the gas source on the basis of the elapsed time elapsed from the reference clock time relating to the driving of the gas carrier source and the variations in pressure sensed by the pressure sensing element in (ii). For example, it is assumed that the gas carrier source is driven in the state in which the cutout valve is closed, whereby the fuel gas in the sensing passage portion is carried to the downstream passage portion on the fuel cell side with respect to the sensing passage portion, and hence the pressure in the sensing passage portion is lowered. In this case, when the pressure sensed by the pressure sensing element shows a predetermined amount of lowering of the pressure within a predetermined range of the elapsed time elapsed from the reference clock time, it is determined that the pressure sensing element is normal. When the pressure sensed by the pressure sensing element does not show the predetermined amount of lowering of the pressure within the predetermined range of the elapsed time elapsed from the reference clock time, it is determined that the pressure sensing element is broken down.

In a case where the pressure sensed by the pressure sensing element shows a predetermined amount of increase in pressure when the cutout valve is opened from the closed state and the fuel gas is supplied from the gas source to the sensing passage portion within a predetermined range of the elapsed time elapsed from the reference clock time, it is determined that both of the pressure sensing element and the gas source are normal, while when the predetermined amount of increase in pressure is not shown even when the elapsed time is elapsed beyond the predetermined range, it is determined that at least one of the pressure sensing element and the gas source is abnormal.

According to this disclosure, determination of the presence or absence of the abnormality of at least one of the pressure sensing element and the gas source is achieved on the basis of the variations in pressure sensed by the pressure sensing element.

The pressure sensing element only has to be the element which senses the physical quantity relating to the gas pressure in the sensing passage portion of the fuel gas passage between the cutout valve and the gas carrier source, and a pressure switch and a pressure sensor or the like are exemplified.

When the system is in the waiting state or immediately before starting the power generating operation, the cutout valve is in the closed state. If the gas carrier source is driven in the state in which the cutout valve is closed when the process in (I) is performed, the cutout valve is remained continuously in the closed state during the system waiting state or immediately before starting the power generating operation. If the cutout valve is opened from the closed state, the cutout valve is opened from the closed state during the system waiting state or immediately before starting the power generating operation.

The cutout valve may be of any type as long as it is configured to open and close the fuel gas passage according to a command from the control unit. However, it is preferable to be capable of stopping the flow of the fuel gas by blocking the fuel gas passage when the cutout valve is fully closed. As the cutout valve, an electromagnetic on-off valve is exemplified. The cutout valve may be of a type which is capable of adjusting the opening degree of the valve as needed on the basis of the command from the control unit, or may be of a type which is capable of selecting only "fully closed" or "fully opened".

Preferably, the control unit outputs an alarm when it is determined that at least one of the pressure sensing element and the gas source is abnormal in the determination process. The alarm may be for a user or the like or a notification to a maintenance company. When it is immediately before starting the generating operation of the system, the start of the power generating operation of the system may be stopped. The gas carrier source may be of any type as long as it is capable of carrying fuel gas, and may be any of a pump, a fan, or a compressor. The fuel cell is not limited to a solid oxide type fuel cell (SOFC) and, depending on the cases, may be a solid high molecular type fuel cell (PEFC), may be a phosphoric acid type fuel cell, may be a molten carbonate fuel cell, or may be other types of fuel batteries.

The determination process may be executed in any of a power generation operation mode, a power generation preparation mode for the power generating operation, a stop mode for stopping the power generating operation, a waiting mode after stopping, and a waiting mode before the power generation preparation of the fuel cell system. In order to prevent the power generating operation from being affected, it is recommended to execute when it is in the waiting mode or in the power generation preparation mode.

(2) According to the fuel cell system in a second aspect of this disclosure, in the first aspect, the control unit performs a first part of the determination process including: (i) driving the gas carrier source in the state in which the cutout valve is closed, and (ii) confirming whether or not the pressure sensed by the pressure sensing element becomes the level lower than a specified pressure Pa within a first predetermined time and determining the presence or absence of the breakdown of the pressure sensing element.

When the gas carrier source is driven in the state in which the cutout valve is closed, fuel gas in the sensing passage portion is carried to the downstream passage portion on the fuel cell side with respect to the gas carrier source, whereby the gas pressure in the sensing passage portion is reduced. The process of sensing the gas pressure in the sensing passage portion by the pressure sensing element when the gas pressure in the sensing passage portion is reduced as described above, and sensing the presence or absence of the breakdown of the pressure sensing element from the sensed pressure in this manner is referred to as a first determination process.

In the process in (i), when the gas carrier source is driven in the state in which the cutout valve is closed, the fuel gas in the sensing passage portion is carried to the fuel cell side with respect to the sensing passage portion, that is, to the downstream passage portion on the downstream side with respect to the sensing passage portion of the fuel gas passage. In this case, in the process of (ii), the gas carrier source may stop driving. However, it is preferable to continuously drive subsequent to the process in (i). It is because the variations in pressure sensed by the pressure sensing element may be observed in parallel with reduction in pressure in the sensing passage portion. The process in (i) and the process in (ii) may be executed simultaneously, or (ii) may be executed after (i).

When performing the first determination process, the control unit confirms whether or not the pressure sensed by the pressure sensing element becomes a level lower than the specified pressure Pa within the first predetermined time. The first predetermined time may be set to a specified time TM1 from the reference clock time with reference to timing when the driving of the gas carrier source is started in the state in which the cutout valve is closed. The control unit may determine that the pressure sensing element is broken down when the sensed pressure does not become a level lower than the specified pressure Pa within the specified time TM1.

The specified pressure Pa and the specified time TM1 are set according to the system considering that the pressure sensing element is not broken down and a closing function of the cutout valve and the gas carrier source are not abnormal. The specified time TM1 may be set to be longer as the specified pressure Pa is lowered. The specified pressure Pa is set arbitrarily within a range lower than the original pressure of the gas source. The specified time TM1 may be set to a period from when the driving of the gas carrier source is started to when the gas pressure in the sensing passage portion is estimated to be lower than the specified pressure Pa, or may be set to a period from when the driving of the gas carrier source is started to when the gas pressure in the sensing passage portion is estimated to be the substantially same as that of the specified pressure Pa.

The method of determining the abnormality on the basis of the fact that the pressure sensed by the pressure sensing element does not become a level lower than the specified pressure Pa within the specified time TM1 in this manner is simple and hence may be applied to either the pressure switch or the pressure sensor.

(3) According to the fuel cell system of a third aspect of this disclosure, in the first or second aspect, the control unit performs a second part of the determination process including: (i) opening the cutout valve from the closed state and (ii) confirming whether or not the pressure sensed by the pressure sensing element becomes a level not lower than a specified pressure Pb within a second predetermined time and determining whether or not at least one of the pressure sensing element and the gas source is abnormal.

When the cutout valve is opened from the closed state, the fuel gas is flowed from the gas source into the sensing passage portion, and the gas pressure in the sensing passage portion is increased. In this manner, the process of sensing the gas pressure in the sensing passage portion by the pressure sensing element when the gas pressure in the sensing passage portion is increased, and sensing the presence or absence of the abnormality of at least one of the pressure sensing element and the gas source from the sensed pressure is referred to as a second determination process.

In the (i) of the second determination process, when the cutout valve is opened in the state in which the on-off valve is closed and the gas carrier source is stopped, the fuel gas is supplied from the gas source and the pressure in the sensing passage portion is increased. In (ii), the control unit may determine the presence or absence of the breakdown of the pressure sensing element on the basis of the elapsed time elapsed from the reference clock time relating to the driving of the gas carrier source and the variations in pressure sensed by the pressure sensing element.

In the second determination process, (i) and (ii) may be executed simultaneously, or (ii) may be executed after (i).

In the process of (i), when the cutout valve is opened from the closed state, the gas carrier source may be stopped driving. It is because the fuel gas flowing into the sensing passage portion via the cutout valve is trapped in the sensing passage portion to increase the gas pressure in the sensing passage portion.

When performing the second determination process, the control unit confirms whether or not the pressure sensed by the pressure sensing element becomes a level not lower than a specified pressure Pb within the second predetermined time. The second predetermined time may be set to a specified time TM2 from the reference clock time with reference to timing when the cutout valve is opened. The control unit may determine that at least one of the pressure sensing element and the gas source is abnormal when the sensed pressure does not become a level not lower than the specified pressure Pb within the specified time TM2.

The specified pressure Pb and the specified time TM2 are set according to the fuel cell system considering the fact that the pressure sensing element and the fuel gas supply source are not abnormal, and the closing function of the cutout valve and the gas carrier source are not broken down. The specified time TM2 may be set to be longer with increase in the specified pressure Pb. The specified pressure Pb may be set arbitrarily so as to be equal to or higher than the specified pressure Pa at the time of the first determination process or within a range not higher than the original pressure of the gas source. The specified time TM2 may be set to a period from when the cutout valve is opened to when the gas pressure in the sensing passage portion is estimated to be higher than the specified pressure Pb, or may be set to a period from when the cutout valve is opened to when the gas pressure in the sensing passage portion is estimated to be the substantially same as that of the specified pressure Pb.

The method of determining the abnormality exists in one of the pressure sensing element and the gas supply source on the basis of the fact that the pressure sensed by the pressure sensing element does not become a level not lower than the specified pressure Pb within the specified time TM2 in this manner is simple and hence may be applied to either the pressure switch or the pressure sensor.

In the case of the system waiting state, the cutout valve and the on-off valve are in the closed state. If the power generating operation is stopped after running the power generating operation, the fuel gas in the sealed passage portion between the cutout vale and the on-off valve is cooled and the negative pressure is created. When a negative pressure is created in the passage portion, the action failure of the cutout valve occurs due to the adhesion or the pressure difference between the cutout valve and the on-off valve. Accordingly, as in the third aspect, when the fact that the pressure is lower than a threshold value is sensed by the pressure sensing element, the cutout valve is opened and the fuel gas is supplied to the passage portion to make the pressure to be a value not lower than the threshold value. Accordingly, the passage portion is prevented from becoming a level lower than the threshold value, and creation of a negative pressure in the gas supply passage may be restrained. The action failure of the cutout valve and the on-off valve may be restrained. The threshold value may be set to a value lower than the original value of the gas source. The threshold value of the pressure in the case where the cutout valve is opened may be set to a value, for example, between - 0.5 kPa to 0.3 kPa inclusive.

In a case where the fact that the pressure sensed by the pressure sensing element is lower than the threshold valve is sensed when the gas carrier source is not driven and the cutout valve and the on-off valve are closed to bring the passage portion between the cutout valve and the on-off valve into a sealed state in the waiting state of the fuel cell, the control unit may perform a negative pressure resolving process to bring the pressure in the passage portion to be a value not lower than the threshold value by opening the cutout valve and supplying fuel gas to the passage portion.

(4) According to the fuel cell system of a fourth aspect of this disclosure, the control unit performs the first part of the determination process when the pressure in the sensing passage portion sensed by the pressure sensing element is higher than a first threshold pressure, and the control unit performs the second part of the predetermined process when the pressure in the sensing passage portion sensed by the pressure sensing element is not higher than a second threshold pressure.

For example, as in the system waiting state, when the cutout valve and the on-off valve are in the closed state, the sensing passage portion is brought into the substantially sealed state and, when the temperature in the sensing passage portion is lowered in this state, a pressure-reduced state may result. In this case, the sensing passage portion is already in the pressure-reduced state before performing the first determination process, so that the determination of the breakdown of the pressure sensing element may not be performed. Accordingly, the control unit performs the first determination process only when the pressure sensed by the pressure sensing element is not lower than the threshold pressure and, when the threshold pressure is lower than the threshold pressure, the control unit does not perform the first determination process and performs the second determination process.

There is a case where the pressure sensing element is broken down, and hence whether or not the pressure in the sensing passage portion is not lower than the threshold pressure may not be determined accurately. When it is determined that the pressure in the sensing passage portion is not lower than the threshold pressure on the basis of a wrong sensed pressure, it is determined that the pressure sensing element is broken down in the first determination process. When it is determined that the pressure in the sensing passage portion is lower than the threshold pressure on the basis of the wrong sensed pressure, whether or not at least one of the pressure sensing element and the gas source is abnormal is determined in the second determination process.

(5) According to the fuel cell system of a fifth aspect of this disclosure, in any one of the first to fourth aspects, the control unit performs the determination process immediately before starting the power generating operation of the fuel cell system.

The determination process to be performed immediately before starting the power generating operation of the fuel cell system may be either the first determination process or the second determination process described above. The action of the pressure sensing element may be confirmed every time when starting the power generating operation by performing the determination process immediately before starting the power generating operation. Therefore, high reliability of the pressure sensing element may be secured. The presence or absence of the breakdown of the pressure sensing element may be determined easily without affecting the power generating operation of the fuel cell.

(6) According to the fuel cell system of a sixth aspect of this disclosure, an on-off valve configured to open and close the fuel gas passage provided in the fuel gas passage on the fuel cell side with respect to the gas carrier source is further provided, and the on-off valve is closed in the determination process.

This determination process means to include the first and second determination processes. By closing the on-off valve in the first and second determination processes, the fuel gas is not supplied to the fuel cell even when the fuel gas in the sensing passage portion is carried to the downstream passage portion on the fuel cell side with respect to the sensing passage portion, and hence the fuel cell is not affected.

(7) According to the fuel cell system of a seventh aspect of this disclosure, the pressure sensing element is a pressure switch.

The pressure switch senses the pressure when a movable member is moved when the pressure of a fluid is not lower than a predetermined pressure and the contact point interlocked with the movable member is switched between ON and OFF by coming into and out of contact with a fixed contact point. As the pressure switch, for example, a diaphragm type and a piston type are exemplified. The pressure switch may cause breakdown by adhesion of the contact point at the time of switching between ON and OFF. Therefore, as described in the third aspect, whether or not the pressure switch is broken down may be determined depending on whether or not the pressure becomes a level lower than the specified pressure Pa within the specified time TM1.

The pressure sensor is expensive, is subjected to significant variations in temperature, individual difference, deterioration, pressure, and pressure accuracy, and the accuracy of detection of the negative pressure in the fuel gas passage is low. In contrast, the pressure switch is inexpensive and has high degree of accuracy. Therefore, the accuracy of detection of the negative pressure is increased by sensing the pressure in the fuel gas passage by using the pressure switch. In addition, the system configuration is simple and inexpensive.

According to this disclosure, a fuel cell system capable of determining the presence or absence of abnormality of at least one of a pressure sensing element provided in a fuel gas passage and a gas source easily may be provided.

### BRIEF DESCRIPTION OF THE DRAWINGS

Fig. 1 is a drawing schematically illustrating a concept of a portion near a fuel gas passage of a fuel cell system according to Embodiment 1;
Fig. 2 is a drawing illustrating a flowchart of a first determination process according to Embodiment 1;
Fig. 3 is a drawing illustrating a flowchart of a second determination process according to Embodiment 2;
Fig. 4 is a drawing illustrating the flowchart of the second determination process according to Embodiment 3;
Fig. 5 is a drawing illustrating a flowchart of the first and second determination processes according to Embodiment 4;
Fig. 6 is a drawing illustrating a flowchart of a negative pressure resolving process according to Reference Embodiment;
Fig. 7 is a drawing schematically illustrating a concept of the fuel cell system according to Embodiment 5; and
Fig. 8 is a drawing illustrating a relationship of a control unit according to Embodiment 5.

### DETAILED DESCRIPTION

### Embodiment 1

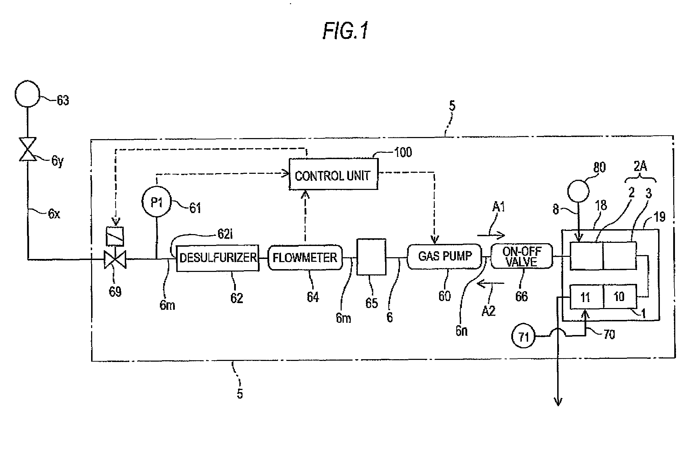

Fig. 1 illustrates a fuel cell system. The fuel cell system includes a fuel cell 1 having an anode 10 and a cathode 11, a cathode gas passage 70 configured to supply cathode gas (air in general) to the cathode 11 of the fuel cell 1, a fuel gas passage 6 configured to supply fuel gas to the anode 10 of the fuel cell 1, a gas pump 60 as a gas carrier source provided in the fuel gas passage 6, a cutout valve 69 provided on an upstream of the gas pump 60 in the fuel gas passage 6, that is, on the side of an inlet port of the fuel gas passage 6, a pressure switch 61 as a pressure sensing element configured to sense a gas pressure in a sensing passage portion 6m between the gas pump 60 and the cutout valve 69 in the fuel gas passage 6, a control unit 100 configured to receive an input of a signal sensed by the pressure switch 61 and control the gas pump 60 and the cutout valve 69, and a housing 5 accommodating these members.

The fuel gas passage 6 is a passage for supplying fuel gas (for example, city gas) before reforming to a reformer 2A. As illustrated in Fig. 1, the fuel gas passage 6 includes the cutout valve 69, the pressure switch 61, a desulfurizer 62 configured to desulfurize the fuel gas, a flowmeter 64, a buffer tank 65, the gas pump 60, an on-off valve 66 (check valve), and a power generation module 18 arranged in series in sequence from the inlet port side. The order of arrangement is not limited thereto.

When the gas pump 60 is driven, a gas pressure in a downstream passage portion 6n between the gas pump 60 and the on-off valve 66 of the fuel gas passage 6 is increased and the pressure applied to the on-off valve 66 exceeds a relief pressure of the on-off valve 66, so that the on-off valve 66 is opened. When the gas pump 60 is transferred from the driving state to the stopped state, the pressure in the downstream passage portion 6n applied to the on-off valve 66 is lowered to a level lower than the relief pressure of the on-off valve 66, so that the on-off valve 66 is automatically closed by an built-in spring. A gas pipework 6x connected to a gas source 63 and an original pressure value 6y connected to the gas source 63 are provided on an upstream of the cutout valve 69. The gas source 63 and the original pressure value 6y are arranged outside of the housing 5.

As illustrated in Fig. 1, the power generation module 18 includes the reformer 2A connected to the fuel gas passage 6, the fuel cell 1 provided on a downstream of the reformer 2A, and a heat-blocking wall 19 surrounding these members. The reformer 2A is connected also to a water supply channel 8. The reformer 2A includes an evaporating unit 2 configured to heat liquid-phase reforming water carried by a water pump 80 as a reforming water carrying source into water vapor and a reforming unit 3 configured to bring about the reforming reaction in fuel gas by the water vapor generated by the evaporating unit 2 to reform the same as anode gas containing hydrogen.

The on-off valve 66 allows the fuel gas to flow from the gas pump 60 into the reformer 2A of the power generation module 18 in the direction indicated by an arrow A1, but prevents the gas to flow in the opposite direction (the direction indicated by an arrow A2).

The pressure switch 61 is provided in the sensing passage portion 6m between the cutout valve 69 and the gas pump 60 in the fuel gas passage 6. It is for sensing a pressure (negative pressure) as upstream side of the fuel gas passage 6 as possible and getting a determination process done quickly. However, the position of the pressure switch 61 may be of any position as long as it falls within the sensing passage portion 6m between the cutout valve 69 and the gas pump 60.

The cathode gas passage 70 is provided with a second gas pump 71 as a second gas carrier source for carrying cathode gas toward the cathode 11 of the fuel cell 1. A sensing signal output from the pressure switch 61 and a sensing signal output from the flowmeter 64 enter the control unit 100. The control unit 100 controls apparatuses such as the cutout valve 69, the gas pump 60 in the fuel gas passage 6, the second gas pump 71 in the cathode gas passage 70, and the water pump 80.

In a power generating operation of the fuel cell 1, the original pressure value 6y is opened and, in addition, the cutout valve 69 is in an opened state and the gas pump 60 is driven, so that the fuel gas in the gas source 63 is carried toward the reformer 2A of the power generation module 18 on a downstream of the gas pump 60 in the direction indicated by the arrow A1. The fuel gas supplied to the reformer 2A is reformed by the reforming reaction into anode gas containing hydrogen. The anode gas is supplied to the anode 10 of the fuel cell 1. In the power generating operation, the second gas pump 71 is driven to carry cathode gas (air) toward the cathode 11 of the fuel cell 1 of the power generation module 18. Accordingly, the fuel cell 1 performs the power generating operation to generate power.

As described above, in a state in which the cutout valve 69 is opened, the gas pump 60 is driven to supply the fuel gas toward the power generation module 18 on the downstream of the gas pump 60 to cause the power generating operation. Since the pressure in the downstream passage portion 6n goes beyond the relief pressure of the on-off valve 66 when the gas pump 60 is driven, the on-off valve 66 is automatically opened.

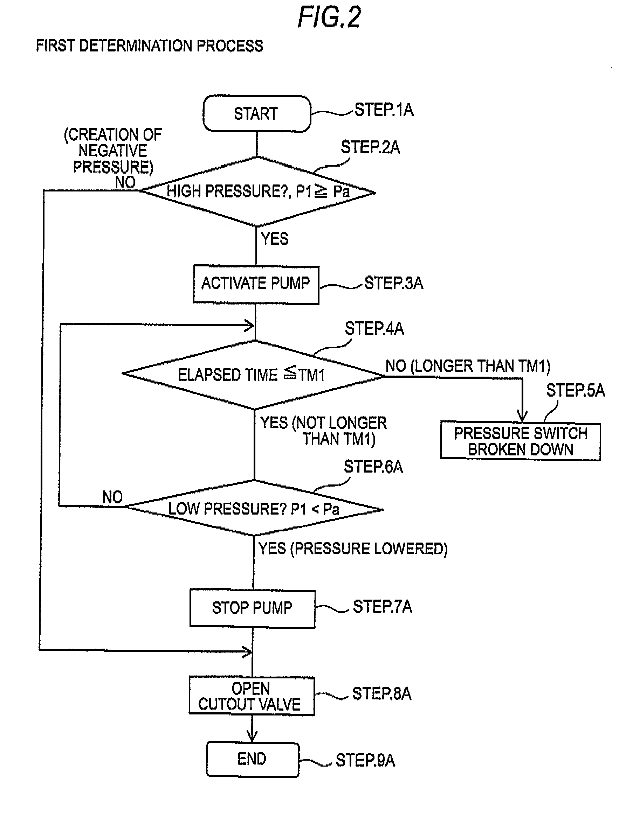

In the fuel cell system of Embodiment 1, a determination process for sensing the presence or absence of a breakdown of the pressure switch 61 is performed immediately before the power generating operation. Fig. 2 illustrates a flowchart of a first determination process. The determination process presupposes that the cutout valve 69, the gas pump 60, and the on-off valve 66 are operated normally.

First of all, the determination process is performed in a power generation preparation mode t2 immediately before the power generating operation. The control unit 100 outputs a power generation preparation command in order to start the power generating operation by a switching operation by a user or according to a system environment. When the power generation preparation command is issued, the mode is transferred from the power generation waiting mode t1 to the power generation preparation mode t2. In the power generation preparation mode t2, the control unit 100 is transferred to Step 1 A to start a flowchart illustrated in Fig. 2. The cutout valve 69 is closed, the gas pump 60 is stopped, and the on-off valve 66 is closed. In Step 2A, the control unit 100 determines whether or not a pressure P1 sensed by the pressure switch 61 is not lower than a specified pressure Pa (P1 ≥ Pa).

The pressure switch 61 has, for example, a case, a diaphragm configured to be displaced according to the pressure of the fluid, a movable contact point configured to move according to the displacement of the diaphragm, and a fixed contact point fixed to the case. Assuming that the position where the fluid pressure is zero is a reference position, when the fluid pressure is not lower than the specified pressure Pa, the diaphragm is displaced from the reference position and hence the movable contact point and the fixed contact point come into contact with each other and are electrically conducted. When the fluid pressure is smaller than the specified pressure Pa, the amount of displacement from the reference position of the diaphragm is small, and hence the movable contact point is moved away from the fixed contact point to cut off the electric conduction.

In this manner, the pressure switch 61 switches between ON and OFF depending on whether or not the pressure is not lower than the specified pressure Pa, and outputs the signal indicating ON or OFF to the control unit 100. The pressure switch 61 is configured to sense whether or not a negative pressure is created in the fuel gas passage, the specified pressure Pa is preferably set to a pressure lower than the original pressure of the fuel gas. For example, when the original pressure of the fuel gas is 1.0 kPa to 2.5 kPa, the specified pressure Pa is preferably set to be a pressure lower than the original pressure and close to the negative pressure, and, for example, is set to 0.3 kPa. However, the value of the specified pressure Pa is not limited thereto.

In Embodiment 1, the first determination process is performed in the power generation preparation mode t2, which is immediately before starting the power generating operation. Fig. 2 illustrates the flowchart of the first determination process.

The control unit 100 starts the first determination process in Step 1A. At this time, the gas pump 60 is stopped, and the on-off valve 66 and the cutout valve 69 are closed. When the first determination process is started, the determination whether or not the pressure P1 sensed by the pressure switch 61 is not lower than the specified pressure Pa is made in Step 2A.

The control unit 100 recognizes that the sensed pressure P1 is not lower than the specified pressure Pa when a signal output from the pressure switch 61 is ON and that the pressure P1 is lower than the specified pressure Pa when the signal is OFF. In respective Steps described below, the pressure switch 61 senses the pressure P1 and, in this case, the pressure switch 61 senses whether or not the pressure P1 is not lower than the specified pressure Pa in any case.

When the pressure P1 sensed by the pressure switch 61 is not lower than the specified pressure Pa (YES), the gas pump 60 is activated in Step 3A. The fuel gas in the sensing passage portion 6m on the upstream side of the gas pump 60 is carried to the downstream passage portion 6n on the downstream of the gas pump 60. The pressure in the sensing passage portion 6m is lowered to a pressure not higher than the specified pressure Pa (0.3 kPa) of the pressure switch 61.

In Step 4A, whether or not the elapsed time is not longer than than a specified time TM1. The specified time TM1 is sufficient to make the sensing passage portion 6m to have a pressure lower than the specified pressure Pa when the gas pump 60, the cutout valve 69, and the pressure switch 61 are normal. For example, TM1 may be an arbitrary value within a range from 1 to 300 seconds. In Embodiment 1, TM1 is 10 seconds. In Embodiment 1, the value of TM1 is a period from the start of driving of the gas carrier source 60 until the pressure in the sensing passage portion 6m becomes a pressure substantially not higher than the specified pressure Pa but relatively close thereto (on the order of 0.1 to 0.3 kPa).

When the elapsed time is not longer than than the specified time TM1, whether or not the sensed pressure P1 is lower than the specified pressure Pa is determined in Step 6A. When the sensed pressure P1 is lower than the specified pressure Pa (YES) in this determination, the gas pump 60 is stopped in Step 7A, and then the cutout valve 69 is opened in Step 8A. In a case where the sensed pressure P1 is not lower than the specified pressure Pa (NO) in the determination in Step 6A, when the elapsed time is increased beyond TM1 (Step 4A), the pressure switch is determined to be broken down (Step 5A).

When the determination is No in Step 2A, the procedure goes to Step 8A to open the cutout valve 69. Then, the fuel gas is supplied from the gas source 63, and the pressure in the sensing passage portion 6m is increased and is returned to a level on the order of the normal pressure (for example, 1.0 to 2.5 kPa) on the substantially same level as the original pressure of the gas source 63. After the procedure as described above, the first determination process is terminated (Step 9A).

In Embodiment 1, the presence or absence of the breakdown of the pressure switch 61 is determined every time when the power generating operation is started and, when it is determined to be abnormal, an alarm is issued. Therefore, reliability of the pressure switch 61 may be enhanced. In the determination process, when the pressure switch 61 is determined to be broken down in Step 5A, an alarm is issued. The alarm may be created by an alarm unit, may be an alarm for a user or a maintenance company, or may be power generation stop for the system.

The cutout valve 69 is opened when the determination process is ended. When the mode is transferred to a next power generation operation mode t3, the gas pump 60 is activated. In due time, the pressure in the downstream passage portion 6n reaches the relief pressure of the on-off valve 66, the on-off valve 66 is opened, and fuel gas is supplied to the reformer 2A of the power generation module 18. The relief pressure of the on-off valve 66 is set to be higher than the pressure in the fuel gas passage in the case of the power generation waiting mode t1 or t5.

Also, the action of the water pump 80 is started and reforming water is supplied to the evaporating unit 2, is heated in the evaporating unit 2, and is converted into water vapor. The water vapor and the fuel gas supplied through the fuel gas passage 6 generate anode gas (hydrogen). The anode gas is carried to the anode 10 of the fuel cell 1, and cathode gas (air) is carried to the cathode 11 of the fuel cell 1, and then the power generating operation is started.

In the power generation mode t3, the gas pump 60 is driven in a state in which the cutout valve 69 is opened. In due time, the pressure in the downstream passage portion 6n between the gas carrier source 60 and the on-off valve 66 in the fuel gas passage 6 reaches the relief pressure of the on-off valve 66, whereby the on-off valve 66 is opened. Fuel gas is supplied to the reformer 2A and hydrogen is generated and carried to the fuel cell 1 together with the air, whereby the power generating reaction is started in the fuel cell.

When a command to terminate the power generating operation is issued, the control unit 100 executes a stop mode t4 to stop the power generating operation. In the stop mode t4, the control unit 100 cools the interior of the power generation module 18 while creating a reducing atmosphere. In order to do so, a smaller quantity of reforming water than that required during the power generating operation is supplied to the reformer 2A by the water pump 80 and, at the same time, a smaller quantity of fuel gas than that required during the power generating operation is supplied to the evaporating unit 2 of the reformer 2A, whereby a small quantity of gas containing hydrogen is generated by the reforming reaction. Since hydrogen creates the reducing atmosphere, excessive oxidation in the power generation module 18 is restrained at the time of cooling the power generation module 18 and resistivity may be enhanced. Furthermore, in the stop mode t4, cathode gas is supplied to the cathode 11 of the fuel cell 1 by driving the second gas pump 71, whereby the interior of the power generation module 18 is cooled. When the power generation module 18 is cooled to a temperature not higher than the specified temperature, probability of oxidation is eliminated, and hence the stop mode t4 is terminated. In association with the termination, the control unit 100 executes the waiting mode t5 (non-power generating state) in which the water pump 80, the gas pump 60, and the second gas pump 71 are kept in the stopped state until the next activation. In this manner, in the waiting mode t5, anode gas, cathode gas, and reforming water are not supplied to the power generation module 18.

In Embodiment 1, the presence or absence of the breakdown of the pressure switch is sensed immediately before starting the power generating operation. Therefore, the action of the pressure switch may be confirmed every time when the power generating operation is started, so that high reliability of the pressure switch may be secured.

In Embodiment 1, the cutout valve 69 is composed of one electromagnetic valve. However, the cutout valve 69 may be composed of two electromagnetic valves (double valve). The two electromagnetic valves are preferably operated simultaneously.

In Embodiment 1, in the first determination process, the action of the pressure switch is confirmed by lowering the gas pressure in the fuel gas passage. Therefore, the action of the pressure switch may be confirmed easily. Since the action of the pressure switch may be confirmed every time when the power generating operation is started, high reliability of the pressure switch may be secured. The confirmation may be executed easily without affecting the power generating operation of the fuel cell.

The pressure switch is inexpensive and sensitive. Therefore, by sensing the pressure in the fuel gas passage by using the pressure switch, detection accuracy of negative pressure is increased. In addition, the system configuration is simple and inexpensive.

In the first determination process, the presence or absence of the breakdown of the pressure switch 61 is sensed in a state in which the cutout valve 69 and the on-off valve 66 are closed to seal a portion between the cutout valve 69 and the on-off valve 66. Therefore, when the fuel gas in the sensing passage portion 6m is carried to the downstream passage portion 6n by the gas pump 60, since a portion between the downstream passage portion 6n and the fuel cell 1 is closed by the on-off valve 66, the waiting state of the fuel cell 1 is not affected.

### Embodiment 2

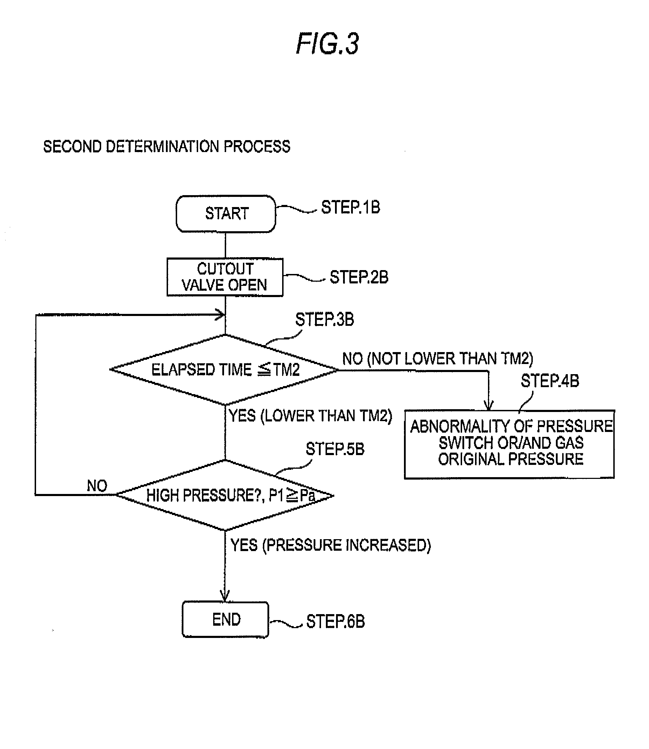

Embodiment 2 is different from Embodiment 1 in that a second determination process is performed. Fig. 3 illustrates a flowchart of the second determination process of Embodiment 2.

The second determination process is executed in the power generation preparation mode t2 immediately before starting the power generating operation. In Step 1 B, this determination process is started. The cutout valve 69 and the on-off valve 66 are closed and the gas pump 60 is stopped. When this determination process is started, the cutout valve 69 in the closed state is opened (Step 2B), and whether or not the elapsed time is not higher than a specified time TM2 is determined (Step 3B). The specified time TM2 may be an arbitrary value within a range from 1 to 300 seconds. The specified time TM2 is preferably set to the substantially same period as or more than the specified time TM1 in Step 4A in Embodiment 1. In Embodiment 2, the specified time TM2 is 20 seconds. In Embodiment 2, the specified time TM2 is a period from when the cutout valve 69 is opened until the pressure in the sensing passage portion 6m becomes the substantially same as the original pressure of the gas source 63.

When the elapsed time is not longer than the specified time TM2 (YES), whether or not the pressure P1 sensed by the pressure switch 61 is not lower than the specified pressure Pa is determined in Step 5B.

Here, abnormality of the gas source 63 may be exemplified as a cause of decrease of the pressure P1 to a level lower than the specified pressure Pa. Therefore, in a case where the sensed pressure P1 is lower than the specified pressure Pa (No in Step 5B) even when the elapsed time exceeds the specified time TM2 (No in Step 3B), the control unit 100 sets an abnormal flag in Step 4B, and an alarm indicating the breakdown of the pressure switch 61 or/and abnormality of the gas source 63 is/are issued.

As a result of determination in Step 5B, when the pressure P1 sensed by the pressure switch 61 is not lower than the specified pressure Pa (P1 ≥ Pa), the pressure switch 61 and the gas source 63 are both determined to be normal, a normal flag is set, and the determination process is terminated in Step 6B. After the termination of this determination process, the mode is transferred to the power generation operation mode t3, and the gas pump 60 is driven.

Also in Embodiment 2, the presence or absence of the abnormalities of the pressure switch and the gas source are sensed in the power generation preparation mode t2. Therefore, abnormalities of the pressure switch and the gas source may be found in an early stage.

Also, the cutout valve 69 is opened and the gas pressure in the sensing passage portion is sensed by the pressure switch 61. Therefore, creation of a negative pressure in the fuel gas passage 6 may be prevented, and the action failure of the cutout valve 69 and the on-off valve 66 due to the adhesion of the valve may be prevented.

### Embodiment 3

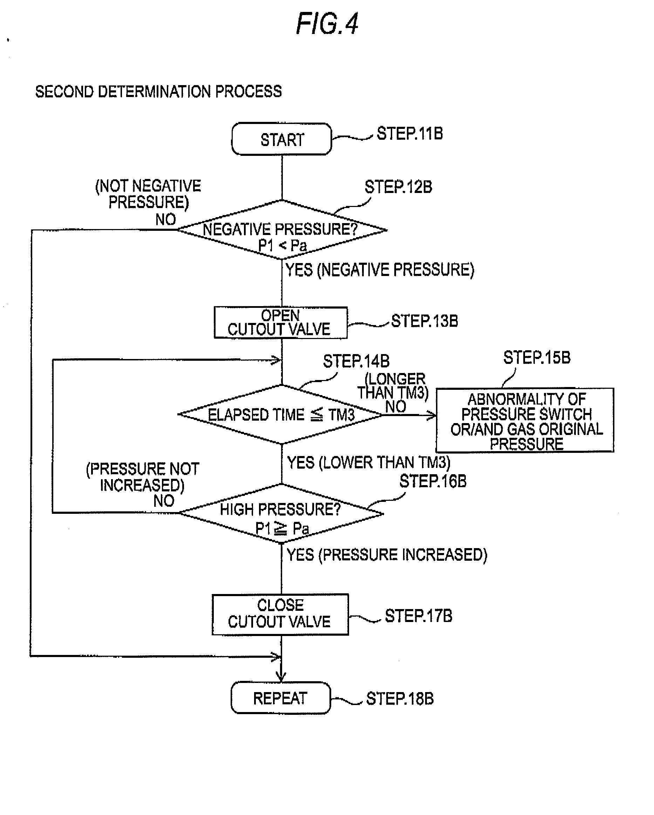

An Embodiment 3 performs the second determination process in the waiting mode t1 before the power generating operation and in the waiting mode t5 after the power generating operation. Fig. 4 illustrates a flowchart of the second determination process of Embodiment 3.

In the waiting mode t1 before the power generating operation and the waiting mode t5 after the power generating operation, the second determination process described below is executed. The waiting mode t1 before the power generating operation corresponds to a period from when a main switch of the fuel cell apparatus is turned ON until the control unit 100 outputs the power generation preparation command. The waiting mode t5 after the stop of the power generating operation corresponds to a period from after the termination of the stop mode t4 in which the power generating operation is stopped until the main switch is turned OFF or the subsequent power generation preparation command is issued. Therefore, the waiting mode t5 after the power generating operation may be overlapped with the waiting mode t1 before the power generating operation.

When the waiting mode t1 or t5 is started, the control unit 100 is transferred to Step 11 B to start the second determination process illustrated in Fig. 4. In both of the waiting modes t1 and t5, the cutout valve 69 is closed, the gas pump 60 is stopped, and the on-off valve 66 is closed. In Step 12B, the control unit 100 determines whether or not the pressure P1 sensed by the pressure switch 61 is lower than the specified pressure Pa (P1 < Pa).

In Embodiment 3, the specified pressure Pa of the second determination process is same as the specified pressure Pa in the determination process illustrated in Fig. 2, and is assumed to be 0.3 kPa in Embodiment 3. When the pressure P1 is not lower than the specified pressure Pa, the procedure goes to Step 18B, and repeats the second determination process.

In the result of determination in Step 12B, if the pressure P1 is lowered to a level lower than the specified pressure Pa, the fuel gas is subjected to heat shrink and lowering of the pressure due to low temperatures or the like in the sensing passage portion 6m between the cutout valve 69 and the gas pump 60 in the sealed state where the pressure switch 61 is installed. Furthermore, the large-capacity desulfurizer 62 is installed in the sensing passage portion 6m, so that the influence of the heat shrink of the fuel gas due to the low temperature is significant, and the CH group of the trapped fuel gas is adsorbed by desulfurizing agent in the desulfurizer 62. In this sense as well, the sensing passage portion 6m is susceptible to pressure drop when maintained in the sealed state. In such a case, the control unit 100 opens the cutout valve 69 to cause the original pressure of the gas source 63 to act on the sensing passage portion 6m in Step 13B. In this case, the gas pump 60 is stopped and the on-off valve 66 is closed, so that the sensing passage portion 6m and the downstream passage portion 6n must be filled with the fuel gas and is restored to the normal pressure.

Therefore, in Step 14B, the control unit 100 determines whether or not the elapsed time from a clock time when the cutout valve 69 is opened to a clock time when the pressure is sensed by the pressure switch 61 is not higher than a specified time TM3. When the elapsed time is not longer than the specified time TM3, the procedure goes to Step 16B. The control unit 100 determines whether or not the pressure P1 sensed by the pressure switch 61 is not lower than the specified pressure Pa is determined in Step 16B. In Embodiment 3, a specified pressure Pa in Step 16B is same as the specified pressure Pa as a determination reference in Step 12B. The specified time TM3 may be an arbitrary value within a range from 1 to 300 seconds. The TM3 is preferably set to the substantially same period as or not less than the specified time TM2 in Step 3B of Embodiment 2. In Embodiment 3, TM3 is 20 seconds. In Embodiment 3, the value of TM3 is recommended to be set to a period sufficient for the pressure in the sensing passage portion 6m to be returned from when the cutout valve 69 is opened until when the pressure in the sensing passage portion 6m becomes normal pressure (1.0 kPa to 2.5 kPa) which is substantially the same as that of the gas source 63.

As a result of determination in Step 16B, the pressure P1 sensed by the pressure switch 61 does not reach a level not lower than the specified pressure Pa, that is, is lower than Pa, the procedure goes back to Step 14B, and the procedures of Steps 14B and 16B are repeated until the elapsed time exceeds the specified time TM3. When the sensed pressure P1 does not reach a pressure not lower than the specified pressure Pa (No in Step 16B) and when the elapsed time exceeds the specified time TM3 (No in Step 14B), the control unit 100 determines that at least one of the pressure switch 61 and the gas source 63 is abnormal in Step 15B.

When it is determined that the pressure P1 is not lower than the specified pressure Pa in Step 16B, the cutout valve 69 is closed in Step 17B, and the second determination process is terminated in Step 18B. Subsequently, the procedure goes back to Step 11B again, and the second determination process is repeated.

The second determination process is preferably performed continuously during the waiting modes t1 and t5 in order to completely prevent the creation of a negative pressure in the fuel gas passage. However, the second determination process may be performed by once or by a plurality of times every predetermined elapsed time or during t1 or t5.

By repeating the second determination process as described above, the presence or absence of abnormality of the pressure switch 61 and/or the gas source 63 may be sensed in the waiting modes t1 and t5. Therefore, the reliability of the pressure switch 61 and the gas source 63 is further enhanced. Creation of a negative pressure in the fuel gas passage 6 may be prevented. Therefore, the action failure due to the adhesion of the cutout valve 69 and the on-off valve 66 may be prevented.

### Embodiment 4

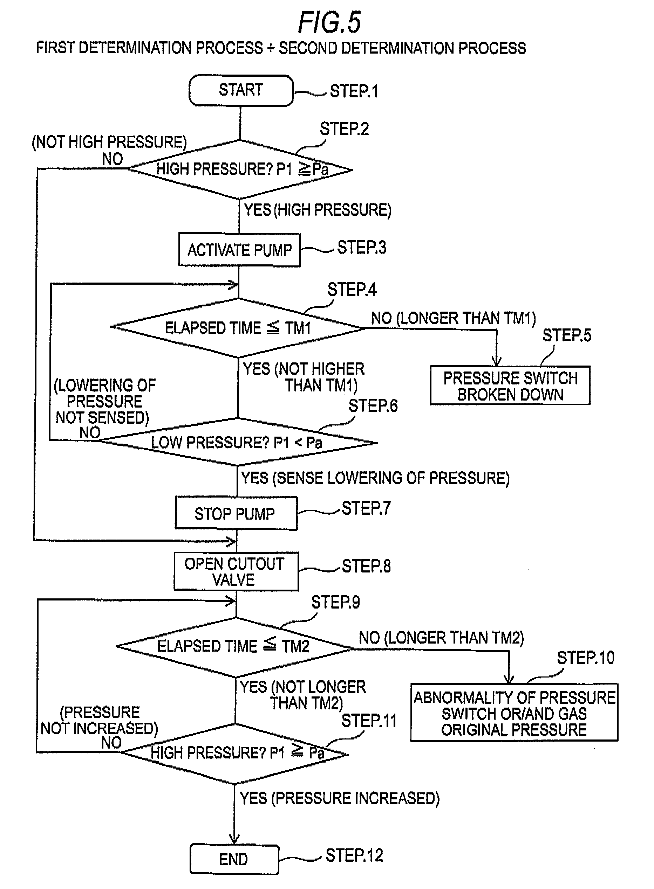

Fig. 5 illustrates a flowchart of a determination process of Embodiment 4. In Embodiment 4, both of the first determination process and the second determination process are performed. Steps 1 to 7 illustrated in Fig. 5 correspond to Steps 1A to 7A (Fig. 2) in Embodiment 1, and Steps 8 to 12 illustrated in Fig. 5 correspond to Step 2B to 6B (Fig. 3).

The first and second determination processes of Embodiment 4 are executed in the power generation preparation mode t2 immediately before starting the power generating operation. In Step 1, this determination process is started. In Step 2, when the pressure P1 is not lower than the specified pressure Pa, the first determination process illustrated in Steps 3 to 7 is performed. In contrast, if the pressure P1 is lowered to a level lower than the specified pressure Pa (No in Step 2), the fuel gas is expected to be lowered in pressure due to low temperatures or the like in the sensing passage portion 6m between the cutout valve 69 and the gas pump 60 where the pressure switch 61 is installed. In such a case, the control unit 100 performs the second determination process illustrated in Steps 8 to 12.

First of all, when the pressure P1 is determined to be not lower than the specified pressure Pa, the control unit 100 is transferred to Step 3 to activate the gas pump 60 while maintaining a state in which the cutout valve 69 and the on-off valve 66 are closed. The fuel gas in the sensing passage portion 6m on the upstream side of the gas pump 60 is carried to the downstream passage portion 6n on the downstream of the gas pump 60. The pressure in the sensing passage portion 6m is lowered to a pressure not higher than a specified pressure Pa (0.3 kPa) of the pressure switch 61.

Subsequently, in Step 4, the control unit 100 determines whether or not the elapsed time from a clock time when the action of the gas pump 60 is started to a clock time when the pressure is sensed by the pressure switch 61 is not higher than the specified time TM1. When the elapsed time is not longer than the specified time TM1, the procedure goes to Step 6. The control unit 100 determines whether or not the pressure P1 sensed by the pressure switch 61 is lower than the specified pressure Pa in Step 6.

In Embodiment 4, the specified pressure Pa is same as the specified pressure Pa (for example, 0.3 kPa) as the determination reference in Step 2. The specified time TM1 is sufficient to make the sensing passage portion 6m to have a pressure lower than the specified pressure Pa when the gas pump 60, the cutout valve 69, and the pressure switch 61 are normal. For example, TM1 may be an arbitrary value within a range from 1 to 300 seconds. In Embodiment 4, TM1 is 10 seconds. In Embodiment 4, the value of TM1 is a period from the start of driving of the gas carrier source 60 until the pressure in the sensing passage portion 6m becomes a pressure not higher than the specified pressure Pa but relatively close thereto (from -0.5 kPa to 0.3 kPa inclusive).

As a result of determination in Step 6, the pressure P1 sensed by the pressure switch 61 is not lower than the specified pressure Pa, that is, the procedure goes back to Step 4, and the procedures in Steps 4 and 6 are repeated until the elapsed time exceeds the specified time TM1. When the sensed pressure P1 is not lower than the specified pressure Pa, that is, not lower than Pa (No in Step 6) and when the elapsed time exceeds the specified time TM1 (No in Step 4), the control unit 100 determines that the pressure switch 61 is broken down, so that the abnormal flag is set and an alarm is emitted (Step 5).

As a result of determination in Step 6, if the pressure P1 sensed by the pressure switch 61 is lowered to a level lower than the specified pressure Pa (P1 < Pa), the pressure switch 61 is considered to be operated normally. Therefore, the control unit 100 is transferred to the next Step 7 to stop the driving of the gas pump 60 and then open the cutout valve 69 in Step 8. Then, the fuel gas is supplied from the gas source 63, and the pressure in the sensing passage portion 6m is increased and is returned to a level on the order of the normal pressure (for example, 1.0 to 2.5 kPa) on the substantially same level as the original pressure of the gas source 63.

Subsequently, in Step 9, the control unit 100 determines whether or not the elapsed time from a clock time when the cutout valve 69 is opened to a clock time when the pressure is sensed by the pressure switch 61 is not longer than the specified time TM2. When the elapsed time is not longer than the specified time TM2, the procedure goes to Step 11. The control unit 100 determines whether or not the pressure P1 sensed by the pressure switch 61 is not lower than the specified pressure Pa in Step 11.

In Embodiment 4, the specified pressure Pa in Step 11 is same as the specified pressure Pa as the determination reference in Step 2. The specified time TM2 may be an arbitrary value within a range from 1 to 300 seconds. The specified time TM2 is preferably set to the substantially same period as or more than the specified time TM1 in Step 6. In Embodiment 4, the specified time TM2 is a period from when the cutout valve 69 is opened until the pressure in the sensing passage portion 6m becomes the substantially same as the original pressure of the gas source 63.

As a result of determination in Step 11, the pressure P1 sensed by the pressure switch 61 does not reach a level not lower than the specified pressure Pa, that is, is lower than Pa, the procedure goes back to Step 9, and the procedures in Steps 9 and 11 are repeated until the elapsed time exceeds the specified time TM2. When the sensed pressure P1 does not reach a pressure not lower than the specified pressure Pa (No in Step 11) and when the elapsed time exceeds the specified time TM2 (No in Step 9), the control unit 100 is transferred to Step 10.

Here, for example, even when the pressure switch succeeds changing over of the switch from ON to OFF at the time of pressure drop, there is a case where changing over from OFF to ON is failed at the time of pressure increase. In Step 11, abnormality of the gas source 63 may be exemplified as a cause of decrease of the pressure P1 to a level lower than the specified pressure Pa. Therefore, when the sensed pressure P1 does not reach the specified pressure Pa even if the elapsed time exceeds the specified time TM2 (No in Step 9), the control unit 100 sets an abnormal flag in Step 10, and an alarm indicating the breakdown of the pressure switch 61 or/and abnormality of the gas source 63 is/are issued.

As a result of determination in Step 11, if the pressure P1 sensed by the pressure switch 61 is not lower than the specified pressure Pa (P1 ≥ Pa), the pressure switch 61 and the gas source 63 are both determined to be normal, and the determination process is set to terminate the determination process in Step 12.

### Reference Embodiment

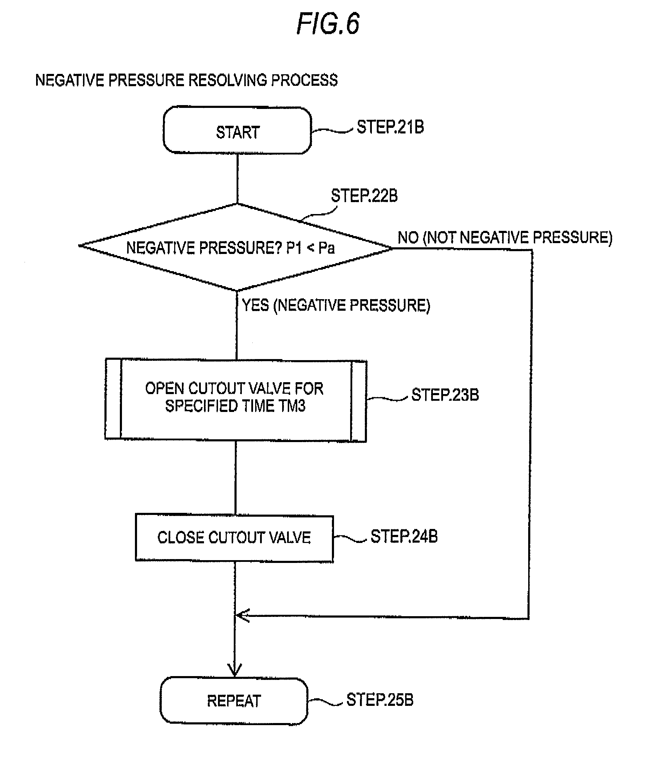

Fig. 6 illustrates a flowchart of a negative pressure resolving process of Reference Embodiment. First of all, in Step 21B, the negative pressure resolving process is started in the waiting mode t1 or t5. In Step 22B, the gas pressure in the sensing passage portion 6m is sensed by the pressure switch 61. Whether or not the sensed pressure P1 is lower than the specified pressure Pa is determined. The specified pressure Pa is on the order of 0.3 kPa.

When the sensed pressure P1 is lower than the specified pressure Pa, the cutout valve 69 is opened during the specified time TM3 in Step 23B, and then the cutout valve 69 is closed in Step 24B. Subsequently, in Step 25B, the negative pressure resolving process is terminated, and from then on, the negative pressure resolving process is repeated.

In Reference Embodiment, the presence or absence of the abnormality of the pressure switch 61 and the gas source 63 are not determined unlike a third determination process in Embodiment 2 (Fig. 4). However in the same manner as Embodiment 3, creation of a negative pressure in the fuel gas passage is prevented in the waiting mode, and the action failure of the cutout valve 69 and the on-off valve 66 such as the adhesion of the value may be prevented.

Although the negative pressure resolving process of Reference Embodiment is performed in the waiting mode t1 or t5, it is also possible to perform the same in the power generation preparation mode t2. Alternatively, it is also possible to perform the negative pressure resolving process in the waiting mode t1 or t5 and the first determination process and/or the second determination process of Embodiments 1 to 4 in the power generation preparation mode t2.

### Embodiment 5

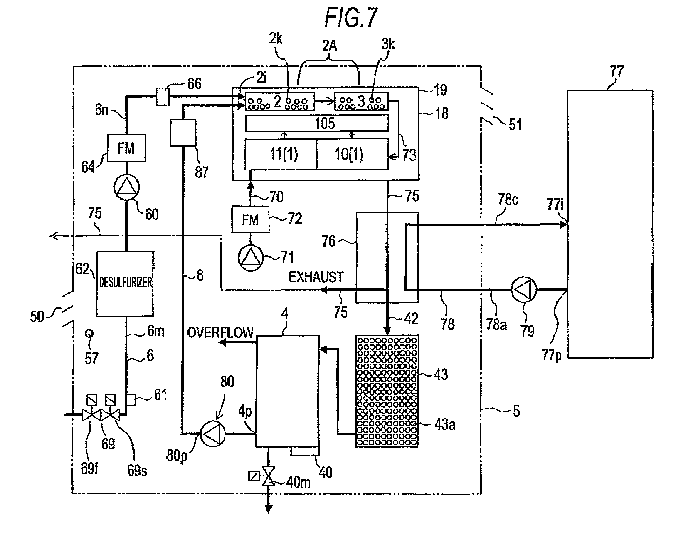

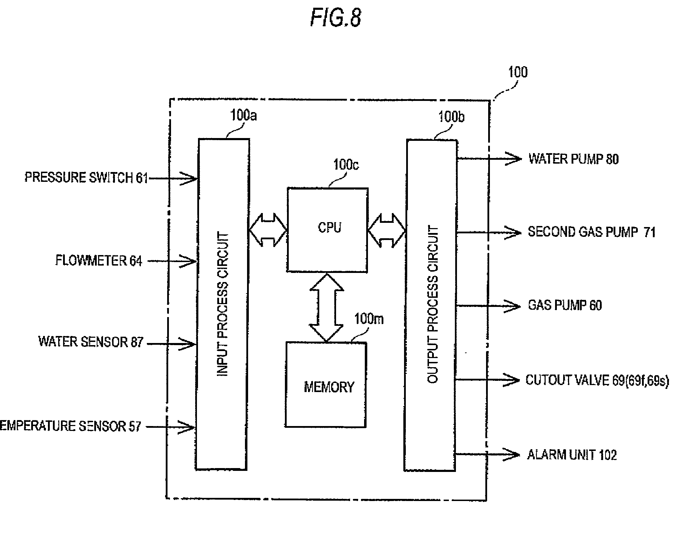

Fig. 7 and Fig. 8 illustrate a concept of Embodiment 5. The Embodiment 5 basically has the same effects and advantages as Embodiments described above. In the following description, different parts will be mainly described. As illustrated in Fig. 7, the fuel cell system includes the fuel cell 1, the evaporating unit 2 configured to generate water vapor by causing liquid-phase water to evaporate, the reforming unit 3 configured to form anode gas by reforming fuel gas by using the water vapor generated by the evaporating unit 2, a water tank 4 configured to accumulate the liquid-phase water supplied to the evaporating unit 2, and the housing 5 configured to accommodate these members. The fuel cell 1 includes the anode 10 and the cathode 11 having an ion conductor interposed therebetween and may be applied to a solid oxide fuel cell referred to also as SOFC, for example (operation temperature; for example 400°C or higher).

The reforming unit 3 is formed by causing a ceramics carrier 3k to carry a reforming catalyst, and is provided adjacent to the evaporating unit 2. The evaporating unit 2 includes a ceramics carrier 2k. The carriers 2k and 3k may be of a granular type or have a honeycomb pattern. The reforming unit 3 and the evaporating unit 2 constitute the reformer 2A, and are surrounded by the heat-blocking wall 19 together with the fuel cell 1, and form the power generation module 18. At the time of the power generating operation, the reformer 2A is heated in the heat-blocking wall 19 so as to be suitable for the reforming reaction. At the time of the power generating operation, the evaporating unit 2 is heated so as to be capable of heating water and converting the same into water vapor. A burning unit 105 heats the reforming unit 3 and the evaporating unit 2. The fuel gas passage 6 is configured to supply fuel from the gas source 63 to the reformer 2A, and includes the cutout valve 69, the desulfurizer 62, the gas pump 60, and the flowmeter 64. The order of arrangement is not specifically limited. The cathode gas passage 70 for supplying cathode gas (air) to the cathode 11 is connected to the cathode 11 of the fuel cell 1. The cathode gas passage 70 is provided with the second gas pump 71 configured to function as a gas carrier source for carrying cathode gas and a flowmeter 72.

As illustrated in Fig. 7, the housing 5 includes an air-inlet port 50 and an air-exhaust port 51 communicating with outside air, and a temperature sensor 57 configured to sense the temperature near the air-inlet port 50 (outside air). The temperature sensor 57 may be provided as needed. The housing 5 includes the water tank 4 configured to accumulate liquid-phase reforming water, which is to be reformed by the reforming unit 3, accommodated therein. The water tank 4 is provided with a water drain valve 40m and is also provided with a heating unit 40 having a heating function such as an electric heater as needed. The heating unit 40 is configured to heat the reforming water stored in the water tank 4 and may be formed by the electric heater or the like. When the environmental temperature such as the outside temperature is low, the water in the water tank 4 is heated by the heating unit 40 so as to restrain from being frozen on the basis of a command from the control unit 100. Basically, the water level in the water tank 4 is preferably set to be the substantially same.

As illustrated in Fig. 7, the water supply channel 8 configured to communicate an outlet port 4p of the water tank 4 and an inlet port 2i of the evaporating unit 2 is provided in the housing 5 as a pipework. As illustrated in Fig. 7, since the water tank 4 is arranged on the lower side of the evaporating unit 2 in the housing 5, the water supply channel 8 extends along the vertical direction. The water supply channel 8 is a passage configured to supply water accumulated in the water tank 4 from the outlet port 4p of the water tank 4 to be carried to the evaporating unit 2. The water supply channel 8 is provided with the water pump 80 which causes the water in the water tank 4 to the evaporating unit 2. The water supply channel 8 is configured to communicate with the atmospheric air via the evaporating unit 2, the reforming unit 3, the fuel cell 1, and the like. The water pump 80 may be provided on the outlet port 4p side of the water tank 4.

In the water supply channel 8, a water sensor 87 is provided on a downstream of the water pump 80 and an upstream of the evaporating unit 2. The water sensor 87 is preferably arranged immediately before the inlet port 2i of the evaporating unit 2 in the water supply channel 8. A flowmeter configured to measure the flow rate of the reforming water is not provided in the water supply channel 8. Depending on the cases, the flowmeter may be provided in the water supply channel 8 for checking a result of computation or the like.

As illustrated in Fig. 8, the control unit 100 includes an input process circuit 100a, an output process circuit 100A, a CPU 100c having a timer measuring function, and a memory 100m configured to function as a memory unit. The control unit 100 receives entries of sensing signals from the pressure switch 61, the flowmeter 64, the water sensor 87, and the temperature sensor 57. The control unit 100 controls the cutout valve 69 (double valve) including a first cutout valve 69f and a second cutout valve 69s, the gas pump 60, and the alarm unit 102, Furthermore, the control unit 100 is capable of controlling the second gas pump 71 and the water pump 80. The first cutout valve 69f and the second cutout valve 69s are both electromagnetic on-off valves and are controlled to act in the same manner at the same time by the control unit 100.

### Operation of System

When performing the power generating operation of the system, the control unit 100 executes a warm-up operation when the power generation operation mode t3 is started. In the warm-up operation, the control unit 100 drives the gas pump 60 in a state in which the cutout valve 69 is opened and passes fuel gas through the fuel gas passage 6 and supplies the same to the burning unit 105 via the fuel cell 1 of the power generation module 18. The control unit 100 drives the second gas pump 71 as well and supplies air flowing through the cathode gas passage 70 to the burning unit 105 via the cathode 11 of the power generation module 18. Since an igniting unit, not illustrated, ignites, fuel gas (for example, city gas) is burned by air in the burning unit 105. Since the burning continues, the reforming unit 3, the evaporating unit 2, and the fuel cell 1 are heated by the burning heat in the burning unit 105, and hence warming up of the system is achieved. In such a warm-up operation, the water pump 80 is stopped and the reforming water in the water tank 4 is not supplied to the evaporating unit 2, so that the reforming process in the reforming unit 3 is not performed. When the reforming unit 3, the evaporating unit 2, and the fuel cell 1 are heated to a predetermined temperature range, the control unit 100 terminates the warm-up operation, and the procedure goes to the heat generating operation.

In the power generating operation, when the control unit 100 drives the water pump 80, the liquid-shape reforming water in the water tank 4 is carried from the outlet port 4p of the water tank 4 through the water supply channel 8 and is supplied from the inlet port 2i to the evaporating unit 2. The reforming water is heated by the evaporating unit 2 into water vapor. The water vapor moves to the reforming unit 3 together with fuel supplied from the fuel gas passage 6. In the reforming unit 3, the fuel gas is reformed by the water vapor into anode gas (gas containing hydrogen). The anode gas is supplied to the anode 10 of the fuel cell 1 via an anode gas passage 73. Furthermore, the second gas pump 71 is driven and cathode gas (gas containing oxygen, air in the housing 5) is supplied to the cathode 11 of the fuel cell 1 via the cathode gas passage 70. Accordingly, the fuel cell 1 generates power. Cathode off gas discharged from the cathode 11 contains oxygen which is not consumed by the power generating reaction. Anode off gas discharged from the anode 10 contains hydrogen which is not consumed by the power generating reaction. Therefore, the anode off gas is burned by the cathode off gas in the burning unit 105 in the power generating operation as well, so that the reforming unit 3 and the evaporating unit 2 are heated so as to be suitable for the reforming reaction.

In the warm-up operation and the power generating operation, high-temperature exhaust gas generated in the power generation module 18 is exhausted to the outside of the housing 5 via an exhaust gas passage 75. The exhaust gas passage 75 is provided with a heat exchanger 76 having a condensing function. A hot-water passage 78 and a hot-water pump 79 connected to the hot-water cylinder 77 are provided. The hot-water passage 78 includes an outbound passage 78a and a homebound passage 78c. Low-temperature water in the hot-water cylinder 77 is discharged from an outlet port 77p of the hot-water cylinder 77 by driving of the hot-water pump 79, passes through the outbound passage 78a, reaches the heat exchanger 76, and is heated by exhaust gas in the heat exchanger 76. Water heated by the heat exchanger 76 is fed back to the hot-water cylinder 77 from a feedback port 77i via the homebound passage 78c. In this manner, water in the hot-water cylinder 77 becomes warm water. Water vapor contained in the above-described exhaust gas is condensed by the heat exchanger 76 and becomes condensed water. The condensed water is flowed down to a water clarification unit 43 by a gravitational force or the like via the condensed water passage 42 extending from the heat exchanger 76. Therefore, the water clarification unit 43 and the water tank 4 are positioned on the lower side of the power generation module 18.

The water clarification unit 43 has water clarification agent 43a such as an ion exchange resin, and hence impurities in the condensed water is removed. The water free from impurities moves to the water tank 4, and is accumulated in the water tank 4 as reforming water. When the water pump 80 is driven in a normal operation, the reforming water in the water tank 4 is supplied to the evaporating unit 2 at a high temperature via the water supply channel 8, is converted into water vapor in the evaporating unit 2, is supplied to the reforming unit 3, and is consumed as a reforming reaction of reforming fuel gas in the reforming unit 3. A general formula of water vapor reformation is considered to be as (1) given below.

(1) CₙHₘ + 2nH₂O → nCO₂ +[(m/2) + 2n] H₂

In the formula, n and m indicate specific integers. When n = 1 and m = 4, methane (CH₄) is subjected to water vapor reformation.

Also in Embodiment 5, the determination process is performed in the power generation preparation mode t2, and the negative pressure resolving process is performed in the waiting modes t1 and t5,

When the fuel gas moves toward the power generation module 18 side by any possibility in at least one of when executing the determination process, and immediately after the execution of the determination process, immediately before the execution of the determination, the control unit 100 preferably causes the air in the housing 5 to be supplied to the cathode gas passage 70 by driving the second gas pump 71 to dilute the fuel gas with air. When it is determined not to be normal in the determination process when the power generating operation is not performed, the problems of the cutout valve 69 and the fuel gas passage 6 may be fixed before a subsequent activation of the system.

### Other Modifications

The invention disclosed here is not limited to Embodiments described above and illustrated in the drawings, and may be modified and embodied as needed without departing from the scope of Embodiments described here. In Fig. 1 and Fig. 2, a system in which the flowmeter 64 and the buffer tank 65 are not mounted in the fuel gas passage 6 is also applicable.

The determination process may be performed not only in the power generation preparation mode t2, but also in the waiting modes t1 and t5. It is also possible to be performed in the waiting modes t1 and t5 instead of the power generation preparation mode t2. When performing in the waiting mode, it may be performed in t1 and t5, or may be performed in t1 or t5. In t1, t2, and t5, the gas pump 60 is stopped, the on-off valve 66 is closed, and the power generating operation of the fuel cell 1 is not in progress. Therefore, the presence or absence of the breakdown of the pressure switch 61 may be determined without affecting the power generating operation, so that high reliability of the pressure switch 61 may be realized.

The fuel cell 1 is not limited to the solid oxide type fuel cell (SOFC) and, depending on the cases, may be a solid high molecular type fuel cell referred to as PEFC, may be a phosphoric acid type fuel cell, may be a molten carbonate fuel cell, or may be other types of fuel batteries. Although the heating unit 40 is provided in the water tank 4, it may be eliminated. The first gas carrier source only has to be capable of carrying the fuel gas, and may be a fan or a compressor instead of the gas pump 60. The second gas carrier source only has to be capable of carrying the cathode gas, and may be the fan or the compressor instead of the second gas pump 71. The cutout valve 69 may be the double valve or may be a single valve. The position of the pressure switch 61 is not limited to the position described above, may be between the desulfurizer 62 and the flowmeter 64, or may be between the gas pump 60 and the desulfurizer 62. A pressure sensor is also applicable instead of the pressure switch 61. Although Embodiments described above are applied to the fuel cell system of a fixed type, the invention is not limited thereto, and may be applied to a fuel cell system having no desulfurizer, or may be applied to a vehicle-mounted type fuel cell system having a fuel tank filled with anode gas as hydraulic gas as a gas source. From the description described above, the following technical idea is understood.
A fuel cell system capable of easily determining the presence or absence of abnormality of a pressure sensing element (61) provided in a fuel gas passage (6) is to be provided. A control unit 100 (i) drives a gas pump 60 in a state in which a cutout valve 69 is closed or opens the cutout valve 69 from the closed state, and (ii) determines whether or not at least one of a pressure switch 61 and a gas source 63 is abnormal on the basis of variations in pressure sensed by the pressure switch 61.

## Claims

1. A fuel cell system comprising:
a fuel cell (1) including an anode (10) and a cathode (11);
a cathode gas passage (70) configured to supply cathode gas to the cathode (11) of the fuel cell (1);
a fuel gas passage (6) provided between a gas source (63) of fuel gas and the anode (10) of the fuel cell (1) and configured to supply the fuel gas from the gas source (63) toward the anode (10) of the fuel cell (1);
a gas carrier source (60) provided in the fuel gas passage (6) and configured to carry the fuel gas to the fuel cell (1) side;
a cutout valve (69) provided on the gas source (63) side with respect to the gas carrier source (60) in the fuel gas passage (6) and configured to open and close the fuel gas passage (6);
a pressure sensing element (61) configured to sense a physical quantity relating to a gas pressure in a sensing passage portion (6m) between the cutout valve (69) and the gas carrier source (60) in the fuel gas passage (6); and
a control unit (100) configured to receive a sensing signal from the pressure sensing element (61) and control the gas carrier source (60) and the cutout valve (69), wherein
the control unit (100) performs a determination process including:
(i) driving the gas carrier source (60) in a state in which the cutout valve (69) is closed or opening the cutout valve (69) from the closed state, and
(ii) determining whether or not at least one of the pressure sensing element (61) and the gas source (63) is abnormal on the basis of variations in pressure sensed by the pressure sensing element (61).

2. The fuel cell system according to Claim 1, wherein the control unit (100) performs a first part of the determination process including:
(i) driving the gas carrier source (60) in the state in which the cutout valve (69) is closed, and
(ii) confirming whether or not the pressure sensed by the pressure sensing element (61) becomes the level lower than a specified pressure Pa within a first predetermined time and determining the presence or absence of a breakdown of the pressure sensing element (61).

3. The fuel cell system according to Claim 1 or 2, wherein the control unit (100) performs a second part of the determination process including:
(i) opening the cutout valve (69) from the closed state, and
(ii) confirming whether or not the pressure sensed by the pressure sensing element (61) becomes a level not lower than a specified pressure Pb within a second predetermined time and determining whether or not at least one of the pressure sensing element (61) and the gas source (63) is abnormal.

4. The fuel cell system according to Claim 3, wherein the control unit (100) performs the first part of the determination process when the pressure in the sensing passage portion (6m) sensed by the pressure sensing element (61) is higher than a first threshold pressure, and
the control unit (100) performs the second part of the predetermined process when the pressure in the sensing passage portion (6m) sensed by the pressure sensing element (61) is not higher than a second threshold pressure.

5. The fuel cell system according to any one of Claims 1 to 4, wherein the control unit (100) performs the determination process immediately before starting a power generating operation of the fuel cell system.

6. The fuel cell system according to any one of Claims 1 to 5, further comprising an on-off valve (66) configured to open and close the fuel gas passage (6) provided in the fuel gas passage (6) on the fuel cell (1) side with respect to the gas carrier source (60), wherein
the on-off valve (66) is closed in the determination process.

7. The fuel cell system according to any one of Claims 1 to 6, wherein the pressure sensing element (61) is a pressure switch.
